(19) Europäisches Patentamt
European Patent Office
Office européen des brevets

(11) **EP 2 101 464 A2**

(12) **EUROPEAN PATENT APPLICATION**

(43) Date of publication:
**16.09.2009 Bulletin 2009/38**

(51) Int Cl.:
***H04L 27/26*** *(2006.01)* ***H04L 25/02*** *(2006.01)*

(21) Application number: **09250126.1**

(22) Date of filing: **19.01.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **14.03.2008 GB 0804789**

(71) Applicant: **Kabushiki Kaisha Toshiba
Minato-ku
Tokyo (JP)**

(72) Inventor: **Yong, Sun**
 **Toshiba Research Europe Limited
Bristol BS1 4ND (GB)**

(74) Representative: **Round, Edward Mark
Marks & Clerk LLP
90 Long Acre
London
WC2E 9RA (GB)**

(54) **Preamble structures for wireless communications systems**

(57) A preamble for use in a packet based communication system is defined on the basis of a preamble for use in a legacy packet based communication system. The preamble is constructed by extracting from the legacy preamble a pilot symbol sequence in frequency of the legacy preamble, replicating the pilot symbol sequence, and concatenating the pilot symbol sequence and the replicated pilot symbol sequence.

FIGURE 7

**Description**

The present invention concerns wireless communication and particularly, but not exclusively, wireless communication in a cellular network including one or more mobile terminals.

Technology, and standards and specifications defining technology, for mobile communications networks, undergo improvement and change over time. For the practical operability of a cellular network, it is important not only to meet new requirements and needs, but also to support existing ('legacy') systems. Such support should take account of legacy performance criteria such as ease of network access, physical level cell/sector identification, or fast handover between cells/sectors.

In a packet based communication network, in accordance with many communications standards, much of the structure of a packet is predetermined to enable receipt of a packet by a communication device in a predictable and practical manner. A preamble is positioned conceptually at the 'front' of a packet, and this usually equates to it being positioned at the start of a packet when considered in the time domain. A preamble has a structure which is known to a recipient device and so enables information concerning the packet to be conveyed to the recipient device with ease. The design of a preamble, and the nature of information conveyed in a preamble, is key to the support of easy deployment of a system. Preamble design is furthermore important in effecting fast network entry, including handover, accurate initial synchronisation and channel estimation. A downlink preamble should also meet other requirements, such as supporting higher system throughput, reliable cell (or sector) search performance, and so on. Such considerations will be evident to the skilled reader.

It might be straightforward to design a preamble for a newly specified communications system, based on new system requirements. However, support for legacy systems is important, particularly in the context of a considerable history of development in the field of mobile communications.

The present invention is herein described in the context of a WirelessMAN-OFDMA system for an advanced interface (IEEE 802.16m IMT-advanced) while fully supporting legacy systems. The 802.16m specification aims to meet IMT-advanced requirements for future mobile communication systems. However, it is a requirement of that specification that a system designed in accordance therewith must also support all of its legacy systems. This presents new challenges for system design and deployment in 802.16-WiMAX.

Even though legacy systems using such a specification are intended to support up to 20 MHz bandwidth (BW), in reality a legacy system might only support up to 10 MHz BW, in accordance with the current WiMAX profile. However, there is a need for a system to support up to 20 MHz BW to meet advanced performance requirements. A preamble should be designed for the 20 MHz BW, while also supporting the legacy 10 MHz BW. Most technical challenges associated with this need are presented on downlink transmission.

A system specified in accordance with WiMAX is required to support three sector antenna configurations. Therefore, the preamble defined for use by the system is required to provide three segments for sector transmissions. Each segment must cover full bandwidth for effective network initiation, synchronisation and channel estimation. Consequently, the downlink can be divided into a three segment structure, and includes a preamble which begins the transmission. The subcarriers used for the preamble are divided into three carrier sets. There are three possible groups, each consisting of one of the defined carrier sets, which may be used by any of the segments.

The first symbol of the downlink transmission is the preamble; there are three types of preamble carrier sets, which are defined by allocation of different subcarriers to each one of them. The subcarriers are modulated using a boosted BPSK modulation with a specific Pseudo-Noise (PN) code. Each segment uses a preamble composed of a carrier set out of the three available carrier sets. The preamble carrier sets can be defined as

$$PreambleCarrierSet_n = n + 3k \tag{1}$$

where n is the number of the preamble carrier set index, and k is a running index.

Each segment uses a preamble composed of a carrier set selected from the three available carrier sets, on the basis of:

- Segment 0 uses preamble carrier set 0
- Segment 1 uses preamble carrier set 1
- Segment 2 uses preamble carrier set 2

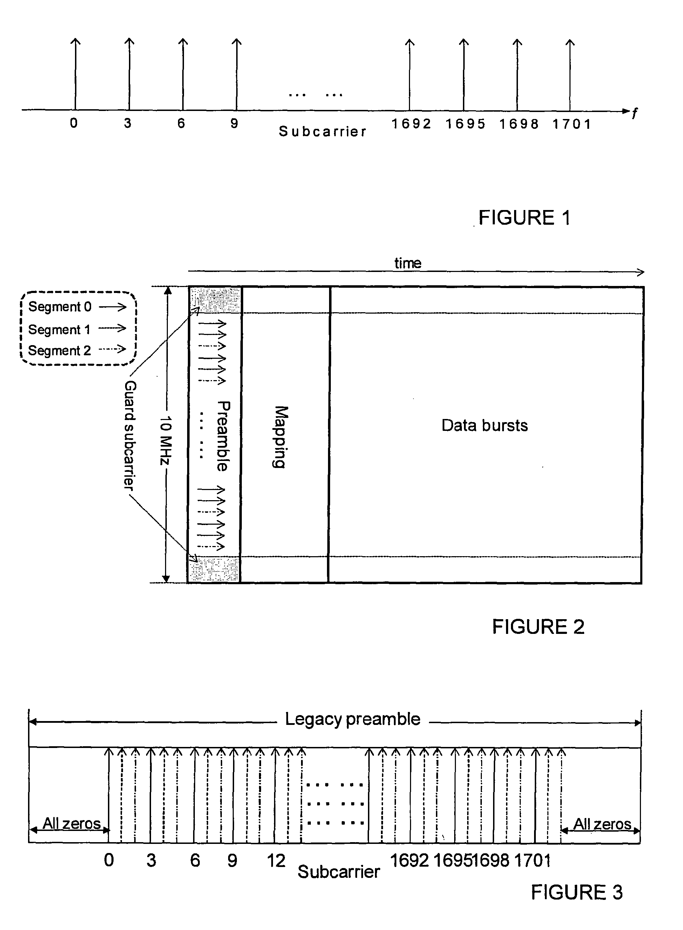

Therefore, each segment eventually modulates each third subcarrier. This is illustrated in Figure 1. As seen in the figure, each segment occupies one third of the subcarriers but covers the whole bandwidth.

The architecture of a preamble in accordance with this, for an OFDMA system with 10 MHz bandwidth, is illustrated by way of example in Figure 2. As illustrated, figure 2 shows a packet having a preamble defined across substantially the full extent of the available 10MHz bandwidth, followed by a mapping portion and then data bursts. As described above, the 10 MHz bandwidth is for a legacy system. Subcarriers at the upper and lower bounds of the bandwidth are defined as guard subcarriers, i.e. they are held to zero, to reduce the impact of collision between bandwidth allocation on a spectrum. The three segments discussed above are defined in the illustrated preamble.

Figure 3 illustrates the preamble according to this legacy system in further detail. As can be seen by the solid, broken and dot-dash lines, which correspond to the segments set out in figure 2, the three segments are initialised across the full spread of the bandwidth.

For a system to support a 20MHz bandwidth and also to support the 10 MHz legacy system, it is desirable that:

- the preamble should perform well on synchronisation for both new systems and legacy systems;
- the preamble should provide full channel estimation for both systems;
- the preamble should keep PAPR as low as possible; and
- it should not require more resources of a pseudorandom number (PN) generation resource

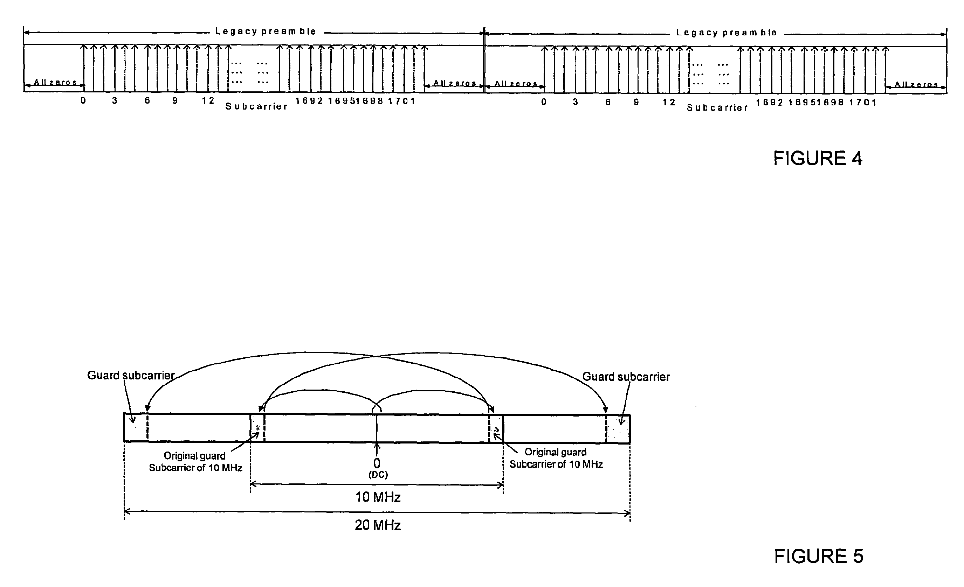

One possible approach to this would be to concatenate two legacy preambles across the newly widened bandwidth. Such an arrangement is illustrated in figure 4. However, this is problematic, as the result is not a single preamble. The guard intervals defined at the bounds of the legacy preamble cause a region of zeros substantially at the centre point of the resultant preamble. This prevents consistency, and also is undesirable for the purposes of channel estimation as channel information is unavailable within the gap.

Similarly, as illustrated in figure 5, a legacy preamble could be embedded centrally of a wider bandwidth, with the additional portions of bandwidth populated to construct a suitable extended preamble. However, the same problem arises. Gaps in the resultant extended preamble cause inconsistencies, and limit channel estimation.

According to an aspect of the invention, there is provided a method of determining a preamble for use in a packet based communication system, on the basis of a preamble for use in a legacy packet based communication system, the method comprising extracting from said legacy preamble a pilot symbol sequence in frequency of said legacy preamble, replicating said pilot symbol sequence, and concatenating said pilot symbol sequence and said replicated pilot symbol sequence.

According to another aspect of the invention, there is provided a preamble for use in a packet based communication system is defined on the basis of a preamble for use in a legacy packet based communication system. The preamble is constructed by extracting from the legacy preamble a pilot symbol sequence in frequency of the legacy preamble, replicating the pilot symbol sequence, and concatenating the pilot symbol sequence and the replicated pilot symbol sequence.

The invention will be further characterised, exemplified and explained, with the aid of the following description of specific embodiments, in conjunction with the accompanying drawings, in which:

Figure 1 is a graph in frequency of a preamble in accordance with the prior art;

Figure 2 is a schematic diagram of a packet employing the preamble of figure 1;

Figure 3 is a graph in frequency of the preamble in accordance with the prior art, in further detail;

Figure 4 is a graph in frequency of an extended preamble in accordance with the prior art;

Figure 5 is a further graph in frequency of an extended preamble in accordance with the prior art;

Figure 6 is a flow diagram of a method in accordance with a first embodiment of the invention, for devising a preamble from a legacy preamble;

Figure 7 is a graph in frequency of a preamble devised by the method of figure 6;

Figure 8 is a flow diagram of a method in accordance with a second embodiment of the invention, for devising a preamble from a legacy preamble;

Figure 9 is a graph in frequency of a preamble devised by the method of figure 8;

Figure 10 is a graph in frequency of a preamble in accordance with a third embodiment of the invention;

Figure 11 is a schematic diagram of a packet employing the preamble of figure 10;

Figure 12 is a graph of correlation properties for a simulation of a legacy preamble;

Figure 13 is a graph of correlation properties for a simulation of a preamble in accordance with a specific embodiment of the invention of 20 MHz BW with FFT size 2048; and

Figure 14 is a graph of correlation properties for a simulation of a legacy preamble of 10 MHz BW with FFT size 1024.

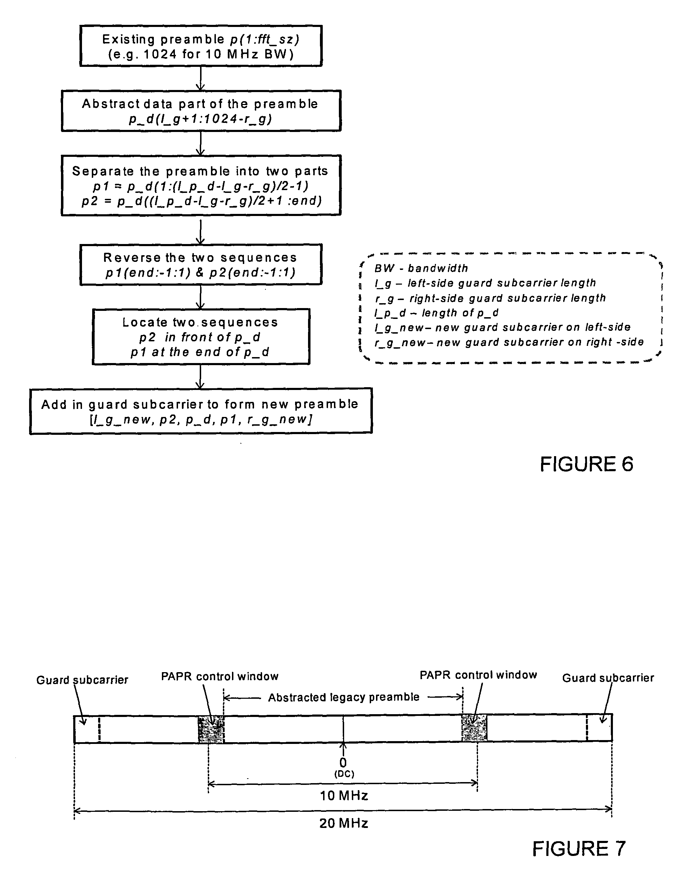

Figure 6 illustrates the structure of a method of constructing a preamble over an extended bandwidth, from a legacy preamble, in accordance with a first specific embodiment of the invention. Construction of a preamble in accordance with the first specific embodiment uses the legacy preamble in its construction. In order to generate this preamble, the method of figure 6 is used. This follows the following steps:

- Based on the existing/legacy preamble, abstract all of the pilots (the active data) of the preamble (guard subcarriers extracted);
- Separate the abstracted preamble into two parts (without DC)
- Assign the two parts to either side of the abstracted preamble
- Add new guard subcarriers on both ends to form the preamble

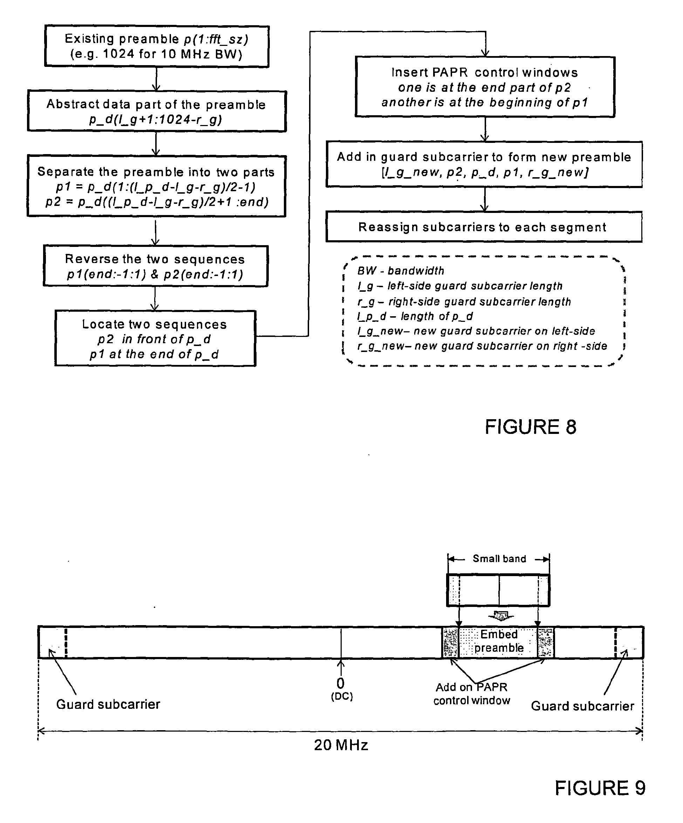

With this design, the preamble in accordance with the specific embodiment maintains good correlation, and is capable of supporting both legacy systems and those in accordance with the specific embodiment of the invention, without a need for modification of such legacy systems. The resultant preamble is of a construction as shown in figure 7.
To ensure that the preamble is of optimal effectiveness, PAPR should be considered. To this end, two windows are inserted, on each side of the abstracted preamble as shown in figure 7. The purpose of preamble optimisation with the control window(s) is to minimise both PAPR and the impact on legacy systems: such legacy systems will, as a result of the preamble structure as described, now lack a guard interval in the frequency domain.
The design of the PAPR control window or windows can use a search engine to identify a random sequence for minimising the value of PAPR of the preamble. The size of the control window or windows should be as small as possible in order that the randomisation property of the designed preamble is the same as for an existing/legacy preamble.
Considering the preamble designs set out above, the process set out in Figure 6 can be augmented into the process illustrated in figure 8.
Assuming the legacy preamble sequence ($S_L$) can be expressed by

$$S_L = \{G_l, D_l, 0, D_r, G_r\} \tag{2}$$

where
$G_l$, $G_r$ *represent* left- and right-side guard subcarriers respectively;
$D_l$, $D_r$ represent left- and right-side preamble data subcarriers respectively; and
DC: central zero '0'.
It is further assumed that the size of each of these is:

$sz_{gl}$ - size of $G_l$
$sz_{gr}$ - size of $G_r$
$sz_{dl}$ - size of $D_l$
$sz_{dr}$ - size of $D_r$

and, $sz_{fft}$ is FFT-size.
Then,

$$sz_{gl} + sz_{gr} + sz_{dl} + sz_{dr} + 1 = sz_{fft}$$

Accordingly, for the preamble in accordance with the specific embodiment, and assuming that the reverse sequence of $D_l$ and $D_r$ are $\overline{D}_l$ and $\overline{D}_r$, respectively, the designed preamble sequence ($S_D$) can be expressed by:

$$S_D = \{G_{l_D}, \overline{D}_r, C_{wl}, D_l, 0, D_r, C_{W_r}, \overline{D}_L, G_{r_D}\} \qquad (3)$$

where
$G_{l_D} G_{r_D}$ represent the left- and right-side guard subcarriers for the preamble, respectively; and
$C_{W_l}, C_{W_r}$ represent the left- and right-side PAPR control window respectively
It is further assumed that the size of each of these is:

$sz_{gl_D}$ -size of $G_{l_D}$
$sz_{gT_D}$ - size of $G_{r_D}$

$sz_{rdl}$ -size of $\overline{D}_l$

$sz_{rdr}$ - size of $\overline{D}_r$
$sz_{cwl}$ - size of $C_{W_l}$
$sz_{cwr}$ - size of $C_{W_r}$

and, $sz_{fft_D}$ is FFT-size of designed preamble.
Then,

$$sz_{gl_D} + sz_{rdr} + sz_{cwl} + sz_{dl} + sz_{dr} + sz_{cwr} + sz_{rdl} + sz_{gr_D} + 1 = sz_{fft_D}$$

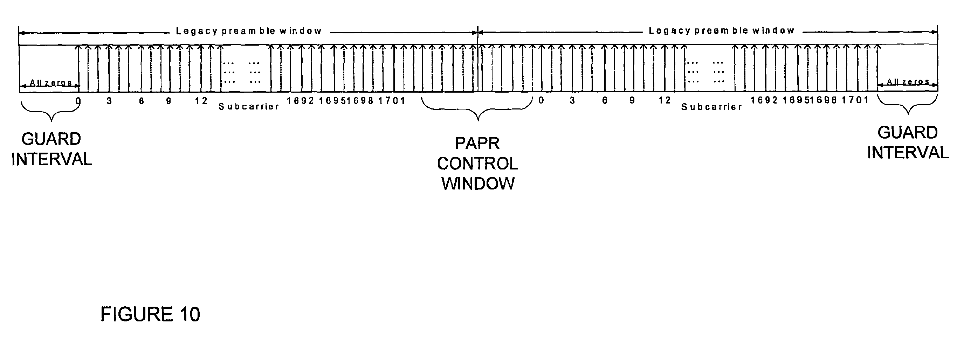

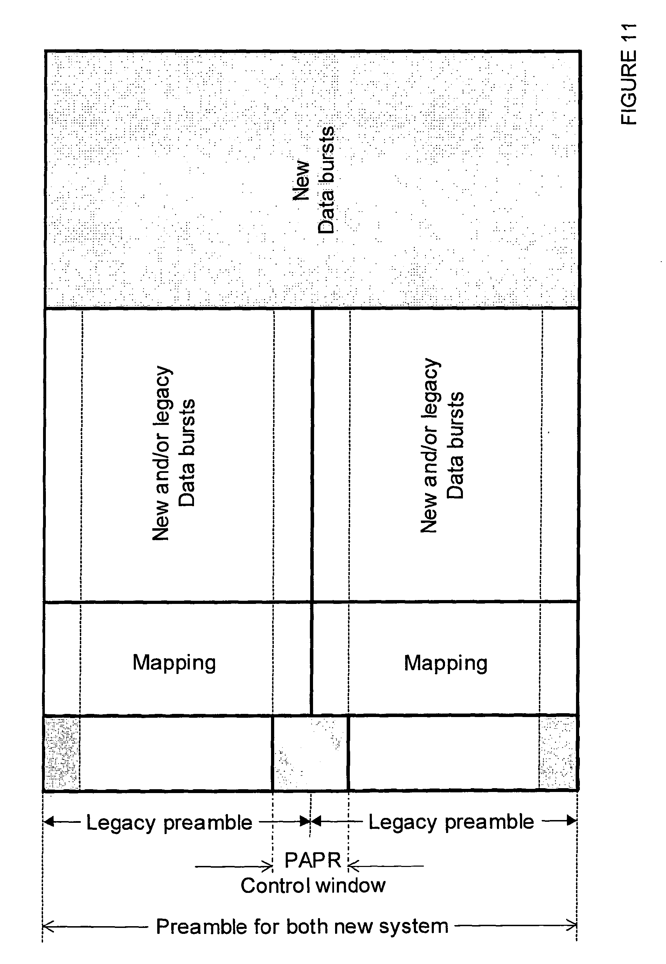

From the above expression, it can be seen that, if $sz_{rdr}$ or $sz_{rdl}$ is equivalent to $sz_{dl}$ or $sz_{dr}$, the PAPR control window is feasible to design. However, if $sz_{rdr}$ or $sz_{rdl}$ is much greater than $sz_{dl}$ or $sz_{dr}$, the control window size could be too large for randomisation without considering other preamble sequences. In this case, the present embodiment offers preamble sequences which are specific to a new communications system but have a legacy preamble embedded therein. This is more convenient for network operation.
The procedures set out in (2) and (3) above are also illustrated in figure 8. Not all embodiments of the invention need have the legacy spectrum placed in the middle of the new spectrum. As shown in figures 10 and 11, the 20 MHz band offers a convenient opportunity to concatenate two 10 MHz bands for legacy system support side by side. In that case, two concatenated legacy preambles can be used for access by two legacy devices. However, for consistency with the approach described above, a PAPR control window should be provided, as illustrated in figure 4. This offers a convenient opportunity to have one legacy system with 10 MHz on one side of the spectrum.
By inserting PAPR control windows, the resulting preamble should be inversely utilized to reassign the subcarriers to each segment. It is also practical to be used with a small bandwidth preamble embedded in a long preamble, as demonstrated in figure 9.
In a cellular application, there might be many preambles for different cells, and/or different segments. Here, as an example, one set of legacy preambles in one cell for three segments, is presented as,

| Segment 0 | 0xA6F294537B285E1844677D133E4D53CCB1F182DE00489E53E 6B6E77065C7EE7D0ADBEAF |
|---|---|
| Segment 1 | 0x52849D8F020EA6583032917F36E8B62DFD18AD4D77A7D2D8 EC2D4F20CC0C75B7D4DF708 |
| Segment 2 | 0xD27B00C70A8AA2C036ADD4E99D047A376B363FEDC287B8 FD1A7794818C5873ECD0D3D56 |

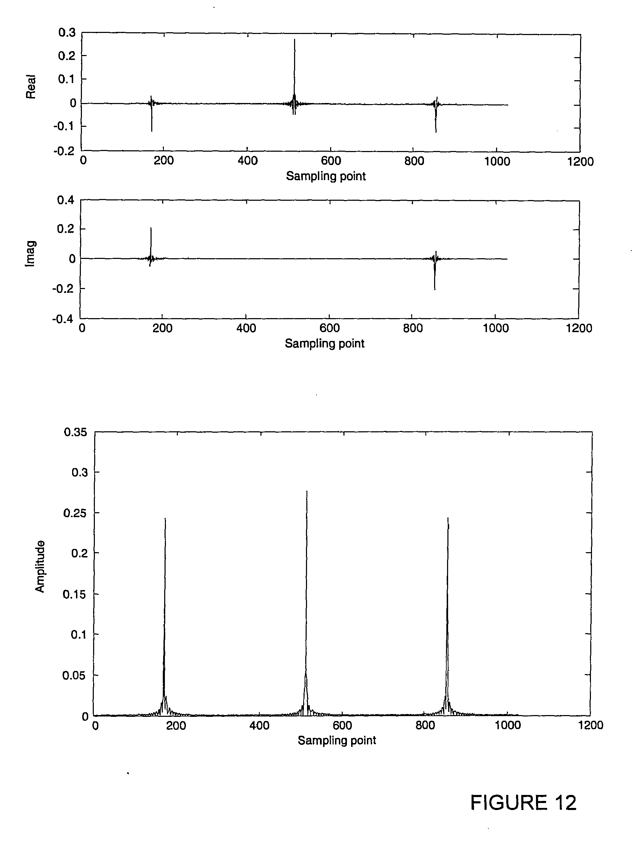

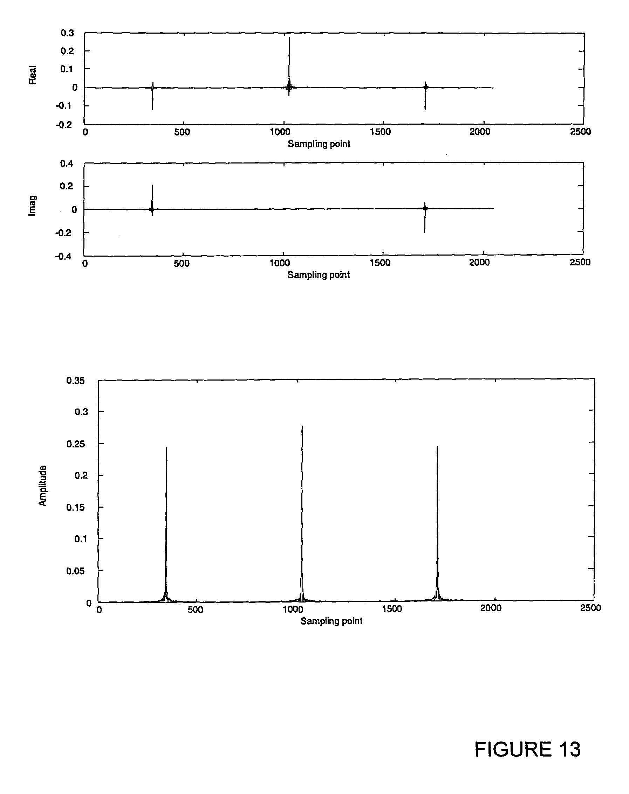

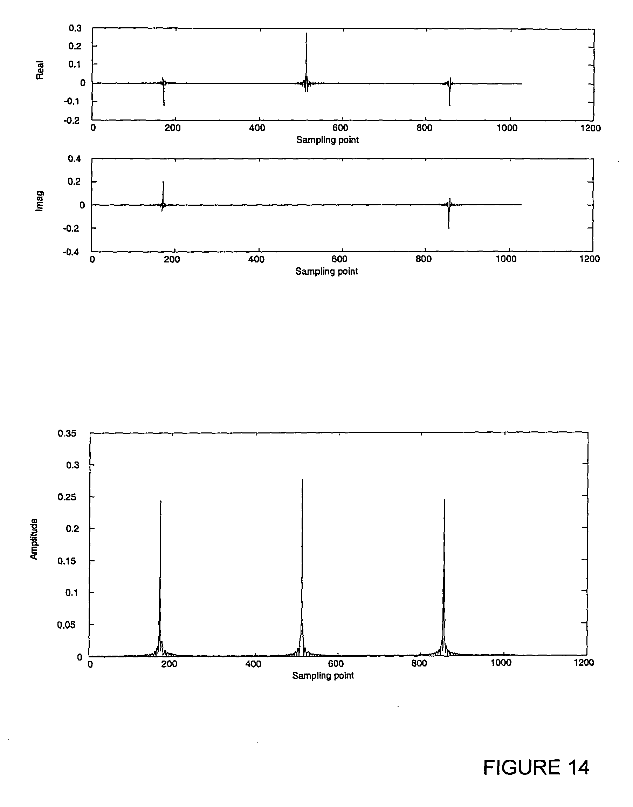

This is a preamble for OFDMA with FFT-size of 1024 (10 MHz BW). Based on this preamble and the subcarrier assignment described in figure 1, the preamble has 284 subcarriers across the whole frequency band on each segment for channel estimation, timing synchronisation and frequency synchronisation. Each segment presents the same synchronisation property as shown in figure 12.
As described previously, the present preamble fully supports the legacy system and the system in accordance with the present embodiment with 20 MHz bandwidth as shown in figures 13 and 14. It will be noted that the legacy 10 MHz BW has no guard subcarriers with the designed preamble but it still achieved the same correlation property as its legacy preamble.

For channel estimation, the 10 MHz bandwidth utilises all available subcarriers: 852 subcarriers are used for legacy channel estimation. Because there are no guard subcarriers in the 10 MHz, the remaining subcarriers are employed for channel estimation in accordance with the present embodiment. Then, with a 20 MHz bandwidth with the present embodiment, it can be seen that the subcarriers are consistently span the whole band for channel estimation.

Regarding PAPR, the legacy preamble with FFT-size of 1024 has a 6.8610dB low PAPR design. With the preamble as described herein, with FFT size of 2048 without PAPR control window insertion (referred to in figure 5), the PAPR is relatively high (9.7715dB). By including a PAPR control window, PAPR can be controlled and a measurement is shown in the following table:

| | Legacy preamble | Designed preamble for new system (legacy support) | | |
|---|---|---|---|---|
| | | No PAPR control | With PAPR control window (diff. size) | | |
| | | | 16 | 32 | 64 |
| **PAPR (dB)** | 6.8 | 9.8 | 8.3 | 7.6 | 7.2 |

In another case, different from the scheme shown in the above table, adopting the preamble design described above to support two concatenated legacy systems as shown in figures 10 and 11, the new preamble with no control window has a relatively high PAPR level of 9.9 dB. However, with by using a PAPR control window, such an arrangement can achieve PAPR of 6.9 dB, which is fairly close to the achieved PAPR of legacy systems. Various methods of determining the appropriate content of the PAPR control window exist, and the selection of one of these is not a central part of this disclosure.

With the practical example presented here, it can be demonstrated that the proposed mechanism is capable of resulting in a preamble to meet requirements for both legacy and new systems in terms of channel estimation, timing synchronisation, frequency synchronisation and PAPR control.

While the invention has been described with reference to certain specific embodiments, the reader will appreciate that the invention is not limited thereto. In particular, the invention should be considered as being defined in the claims appended hereto, with reference to the aforementioned description (but not limited thereto) and accompanying drawings.

## Claims

1.    A method of determining a preamble for use in a packet based communication system, on the basis of a preamble for use in a legacy packet based communication system, the method comprising extracting from said legacy preamble a pilot symbol sequence in frequency of said legacy preamble, replicating said pilot symbol sequence, and concatenating said pilot symbol sequence and said replicated pilot symbol sequence.

2.    A method in accordance with claim 1 and further including, prior to said concatenating, dividing said replicated pilot symbol sequence such that said concatenating of resultant portions of said replicated pilot symbol sequence with said pilot symbol sequence comprises concatenating a first resultant portion, with said pilot symbol sequence and with a second resultant portion, in that sequence.

3.    A method in accordance with claim 1 or claim 2 wherein said concatenating comprises defining at a point of concatenation a peak to average power ratio control window, and determining a random sequence of pilot symbols in said concatenated sequence of pilot symbols which, when inserted in said peak to average power ratio control window cause reduction in peak to average power ratio for said concatenated sequence of pilot symbols.

4.    A method in accordance with any preceding claim and including defining guard intervals about said concatenated pilot symbol sequence.

5.    A method in accordance with any preceding claim and including, prior to said concatenating, processing said replicated pilot symbol sequence.

**6.** A method in accordance with claim 5 wherein said processing comprises reversing said replicated pilot symbol sequence in frequency space.

**7.** A packet based communication signal comprising a preamble defined in accordance with any one of the preceding claims.

**8.** A preamble defined by a method in accordance with any one of claims 1 to 6.

**9.** A wireless communications apparatus operable to emit a packet based communication over a plurality of subcarriers defined in frequency domain, the communication comprising a preamble in accordance with claim 8.

**10.** Apparatus in accordance with claim 9 including preamble data processing means operable to process data to be inserted in the first portion to derive data to be inserted in the second portion.

**11.** Apparatus in accordance with claim 10 wherein the preamble data processing means is operable to extract pilot symbols from said data to be inserted in the first portion, for further processing.

**12.** Apparatus in accordance with claim 11 wherein the preamble data processing means is operable to divide extracted pilot symbols into two or more portions.

**13.** Apparatus in accordance with claim 12 wherein the preamble data processing means is operable to reverse sequence of contents of said two or more portions.

**14.** Apparatus in accordance with claim 13 and operable to insert in said second portion said reversed data.

**15.** Apparatus in accordance with any one of claims 10 to 14 wherein said preamble comprises a control window interposed between said first and second portions of said preamble, for controlling PAPR effective by said preamble in use.

**16.** Apparatus in accordance with claim 15 and including number generation means suitable for generating, substantially randomly, a number to be contained in said control window.

**17.** A method of effecting communication in a packet based network, the method comprising emitting a signal bearing a packet over a plurality of subcarriers defined in frequency domain, the packet comprising a preamble in accordance with claim 8.

**18.** A preamble for use in a packet based communication system defined on the basis of a preamble for use in a legacy packet based communication system, the preamble being constructed by extracting from the legacy preamble a pilot symbol sequence in frequency of the legacy preamble, replicating the pilot symbol sequence, and concatenating the pilot symbol sequence and the replicated pilot symbol sequence.

**19.** A computer program product comprising computer executable instructions operable to cause a computer controlled communications apparatus to perform a method in accordance with any one of claims 1 to 6.

.FIGURE 1

FIGURE 2

FIGURE 3

EP 2 101 464 A2

Legacy preamble — Legacy preamble

All zeros — All zeros — All zeros — All zeros

0 3 6 9 12 Subcarrier 1692 1695 1698 1701    0 3 6 9 12 Subcarrier 1692 1695 1698 1701

**FIGURE 4**

Guard subcarrier                                    Guard subcarrier

Original guard
Subcarrier of 10 MHz

0
(DC)

Original guard
Subcarrier of 10 MHz

10 MHz

20 MHz

**FIGURE 5**

Existing preamble *p(1:fft_sz)*
(e.g. 1024 for 10 MHz BW)

Abstract data part of the preamble
*p_d(l_g+1:1024-r_g)*

Separate the preamble into two parts
*p1 = p_d(1:(l_p_d-l_g-r_g)/2-1)*
*p2 = p_d((l_p_d-l_g-r_g)/2+1 :end)*

Reverse the two sequences
*p1(end:-1:1) & p2(end:-1:1)*

Locate two sequences
*p2 in front of p_d*
*p1 at the end of p_d*

Add in guard subcarrier to form new preamble
*[l_g_new, p2, p_d, p1, r_g_new]*

*BW - bandwidth*
*l_g – left-side guard subcarrier length*
*r_g – right-side guard subcarrier length*
*l_p_d – length of p_d*
*l_g_new– new guard subcarrier on left-side*
*r_g_new– new guard subcarrier on right -side*

FIGURE 6

Guard subcarrier          PAPR control window                    PAPR control window          Guard subcarrier
                          ├───── Abstracted legacy preamble ──────┤

0
(DC)

10 MHz

20 MHz

FIGURE 7

Existing preamble *p(1:fft_sz)*
(e.g. 1024 for 10 MHz BW)

↓

Abstract data part of the preamble
*p_d(l_g+1:1024-r_g)*

↓

Separate the preamble into two parts
*p1 = p_d(1:(l_p_d-l_g-r_g)/2-1)*
*p2 = p_d((l_p_d-l_g-r_g)/2+1 :end)*

↓

Reverse the two sequences
*p1(end:-1:1) & p2(end:-1:1)*

↓

Locate two sequences
*p2 in front of p_d*
*p1 at the end of p_d*

→

Insert PAPR control windows
*one is at the end part of p2*
*another is at the beginning of p1*

↓

Add in guard subcarrier to form new preamble
*[l_g_new, p2, p_d, p1, r_g_new]*

↓

Reassign subcarriers to each segment

*BW - bandwidth*
*l_g – left-side guard subcarrier length*
*r_g – right-side guard subcarrier length*
*l_p_d – length of p_d*
*l_g_new– new guard subcarrier on left-side*
*r_g_new– new guard subcarrier on right -side*

FIGURE 8

Small band

Embed preamble

Guard subcarrier

0
(DC)

Add on PAPR
control window

Guard subcarrier

20 MHz

FIGURE 9

11

Legacy preamble window

Legacy preamble window

All zeros

All zeros

0 3 6 9 12 Subcarrier 1692 1695 1698 1701

0 3 6 9 12 Subcarrier 1692 1695 1698 1701

GUARD
INTERVAL

PAPR
CONTROL
WINDOW

GUARD
INTERVAL

FIGURE 10

EP 2 101 464 A2

FIGURE 11

FIGURE 12

FIGURE 13

FIGURE 14